(19) Europäisches Patentamt

European Patent Office

Office européen des brevets

(11) **EP 3 550 869 B1**

(12) # EUROPEAN PATENT SPECIFICATION

(45) Date of publication and mention
of the grant of the patent:
**30.11.2022 Bulletin 2022/48**

(51) International Patent Classification (IPC):
**H04W 24/02** (2009.01)   **H04W 16/18** (2009.01)
**H04W 16/26** (2009.01)   **H04W 36/22** (2009.01)
**H04W 52/02** (2009.01)

(21) Application number: **17876514.5**

(22) Date of filing: **11.10.2017**

(52) Cooperative Patent Classification (CPC):
**H04W 24/02; H04W 16/18; H04W 16/26;**
H04W 52/0206; Y02D 30/70

(86) International application number:
**PCT/CN2017/105689**

(87) International publication number:
**WO 2018/099189 (07.06.2018 Gazette 2018/23)**

(54) **CELL MERGING METHOD, SYSTEM AND BASE STATION**

ZELLENVEREINIGUNGSVERFAHREN, SYSTEM UND BASISSTATION

PROCÉDÉ DE FUSION DE CELLULES, SYSTÈME ET STATION DE BASE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.12.2016 CN 201611109730**

(43) Date of publication of application:
**09.10.2019 Bulletin 2019/41**

(73) Proprietor: **ZTE Corporation
Shenzhen, Guangdong 518057 (CN)**

(72) Inventors:
• **LI, Zhongyang
Shenzhen
Guangdong 518057 (CN)**
• **SHI, Xinya
Shenzhen
Guangdong 518057 (CN)**
• **YANG, Houyi
Shenzhen
Guangdong 518057 (CN)**

(74) Representative: **Aipex B.V.
P.O. Box 30223
3001 DE Rotterdam (NL)**

(56) References cited:
**WO-A1-2014/161896    CN-A- 103 209 416**

CN-A- 103 841 582      CN-A- 104 105 145
CN-A- 104 519 506      CN-A- 105 338 539
US-A1- 2006 293 056

• **"3rd Generation Partnership Project; Technical
Specification Group Radio Access Network;
Evolved Universal Terrestrial Radio Access
(E-UTRA); Study on Energy Saving Enhancement
for E-UTRAN (Release 12)", 3GPP STANDARD;
3GPP TR 36.887, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. RAN WG3, no. V1.3.0, 10
July 2014 (2014-07-10), pages 1-34, XP050774649,
[retrieved on 2014-07-10]**
• **SAMSUNG ET AL: "Leftover issue discussion on
SON for AAS", 3GPP DRAFT; R3-151535 SON
AAS, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE , vol. RAN
WG3, no. Beijing, P.R. China; 20150824 -
20150828 23 August 2015 (2015-08-23),
XP051006700, Retrieved from the Internet:
URL:http://www.3gpp.org/ftp/Meetings_3GPP_
SYNC/RAN3/Docs/ [retrieved on 2015-08-23]**

**(Cont. next page)**

- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 14)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V14.0.0, 29 September 2016 (2016-09-29), pages 1-314, XP051172664, [retrieved on 2016-09-29]
- "3rd Generation Partnership Project; Technical Specification Group Services and System Aspects; Telecommunication management; Study on Operations, Administration and Maintenance (OAM) aspects of Self-Organizing Network (SON) for Active Antenna System (AAS) based deployments; (Release 14)", 3GPP DRAFT; 32865-100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG SA 30 November 2016 (2016-11-30), XP051679927, Retrieved from the Internet: URL:http://www.3gpp.org/ftp/tsg%5Fsa/TSG%5FSA/TSGS%5F74/Docs/SP%2D160842%2Ezip [retrieved on 2016-11-30]
- "3rd Generation Partnership Project; Technical Specification Group Radio Access Network; Study on next generation Self-Optimizing Network (SON) for UTRAN and E-UTRAN (Release 12)", 3GPP STANDARD ; TECHNICAL REPORT ; 3GPP TR 37.822, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V12.1.0, 21 March 2015 (2015-03-21), pages 1-22, XP051294216, [retrieved on 2015-03-21]

## Description

## TECHNICAL FIELD

The present application relates to the field of communications and, in particular, to a cell merging method and system, and a base station.

## BACKGROUND

In a Long Term Evolution (LTE) system in the third generation partnership project (3GPP), multi-cell cooperation has become a technology of widespread interest in the next generation of wireless communications to acquire better network performance. The cell merging and splitting technology has become the best choice to avoid co-channel interference and frequent handover. This technology can enable multiple radio remote units (RRUs) to be aggregated in a logical cell. In this networking scenario, a range covered by each RRU is referred to as a cell portion (CP). When a user equipment (UE) moves under the ranges covered by different RRUs in the same logical cell, no handover occurs, and the mobility problem becomes a CP detection and scheduling problem. The detection and scheduling of a base station reduces the error probability in the network handover and improves the key performance indicator (KPI).

Cell merging and splitting are usually applied in scenarios such as high-speed railways, air routes, and dense buildings. In the existing art, the cell merging is configured according to application scenarios and becomes valid through the configuration of network management by operators. When several cells are merged, the original cells will be deleted and reconfigured according to the parameter of the merged cell. For the above reason, when the cell accessed by the user equipment (abbreviated as UE) is merged, the UE is released due to the deletion of the cell. On the contrary, multi-cell dynamic splitting cannot be implemented in the existing art, and manual splitting also results the releasing of the UE.

Therefore, in the existing art, the UE is released in the multi-cell merging and splitting processes, causing that the state and traffic of the UE cannot be guaranteed.

Further relevant technology are also known from "3rd Generation Partnership Project; Technical Specification Group Radio Access Network; Evolved Universal Terrestrial Radio Access (E-UTRA); Study on Energy Saving Enhancement for E-UTRAN (Release 12)", 3GPP STANDARD, 3GPP TR 36.887, V1.3.0, 10 July 2014 (2014-07-10); SAMSUNG ET AL: "Leftover issue discussion on SON for AAS", 3GPP DRAFT; R3-151535, 23 August 2015 (2015-08-23); "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 14)", 3GPP STANDARD, 3GPP TR 36.300, V14.0.0, 29 September 2016 (2016-09-29); and "3rd Generation Partnership Project; Technical Specification Group Services and System Aspects; Telecommunication management; Study on Operations, Administration and Maintenance (OAM) aspects of Self-Organizing Network (SON) for Active Antenna System (AAS) based deployments; (Release 14)", 3GPP TR 32.865, V1.0.0, November 2016 (2016-11-30).

## SUMMARY

Embodiments of the present application provide a cell merging method and system, and a base station for improving network performance, reducing co-channel interference, and solving the problem in the existing art that a UE is released in a multi-cell merging process and a state and traffic of the UE cannot be guaranteed.

The invention is defined in the independent claims. Embodiments of the invention are defined in the dependent claims.

An example useful for understanding the present invention provides a cell merging method. The method includes: receiving a cell merging instruction sent by a first cell and used for instructing merging of the first cell and a second cell; maintaining a cell parameter of the second cell and a cell parameter of the first cell according to the cell merging instruction; handing over user equipments (UEs) served by the second cell to a first shadow cell and synchronizing information of the handed over UEs with the first cell, where the first shadow cell has the cell parameter of the first cell and is maintained by the second cell; and upon handing over all the UEs served by the second cell to the first shadow cell and upon determining that the information of all the handed over UEs is synchronized with the first cell, stopping maintaining the cell parameter of the second cell.

Alternatively, before receiving the cell merging instruction sent by the first cell and used for instructing merging of the first cell and the second cell, the method further includes: receiving a cell merging request sent by the first cell and used for requesting merging of the first cell and the second cell; and sending a cell merging response to the first cell, where the cell merging response carries cell information of the second cell, where the cell information is used by the first cell to determine whether the second cell satisfies a merging condition for merging with the first cell.

Alternatively, the cell information includes at least one of: the number of UEs served by the second cell, indication information indicating whether the second cell has a higher-priority UE satisfying a predetermined UE level, and information for identifying a level of a co-channel interference suffered by the second cell caused by other cells other than the second cell.

Alternatively, after sending the cell merging response to the first cell, the method further includes: determining, by the first cell, whether one or more second cells satisfy a predetermined merging condition for merging with the first cell according to the cell merging responses sent by the one or more second cells, and sending the cell merging instruction to the one or more second cells if the predetermined merging condition is satisfied.

Alternatively, before receiving the cell merging request sent by the first cell and used for requesting merging of the first cell and the second cell, the method further includes that the first cell determines whether at least one of the following merging trigger conditions is satisfied: a higher-priority UE satisfying a predetermined UE level enters the first cell, a level of a co-channel interference of the first cell reaches a predetermined level, and a number of UEs served by the first cell exceeds a predetermined threshold; and the first cell sends the cell merging request used for requesting merging of the first cell and the second cell to the second cell if at least one of the merging trigger conditions is satisfied.

An example useful for understanding the present invention provides a cell splitting method. The method includes: receiving a cell splitting instruction sent by a master cell portion (CP) of a merged cell and used for requesting splitting a secondary CP from the merged cell; maintaining a cell parameter of the merged cell and a cell parameter of a splitting cell split from the merged cell according to the cell splitting instruction; handing over user equipments (UEs) served by the secondary CP to a second shadow cell, where the second shadow cell has the cell parameter of the splitting cell and is maintained by the secondary CP; and after handing over all the UEs served by the secondary CP to the second shadow cell, stopping maintaining the cell parameter of the merged cell.

Alternatively, before receiving the cell splitting instruction sent by the master CP of the merged cell and used for requesting splitting the secondary CP from the merged cell, the method further includes that the master CP determines the UEs served by the secondary CP, and sends information of the determined UEs served by the secondary CP to the secondary CP.

Alternatively, before receiving the cell splitting instruction sent by the master CP of the merged cell and used for requesting splitting the secondary CP from the merged cell, the method further includes: the master CP determines whether the merged cell satisfies at least one of the following splitting trigger conditions: a higher-priority UE satisfying a predetermined UE level leaves the merged cell, a level of a co-channel interference of the merged cell is lower than a predetermined level, and a number of UEs served by the merged cell is lower than a predetermined threshold; and the master CP sends the cell splitting instruction used for requesting splitting the secondary CP from the merged cell to the secondary CP if the merged cell satisfies at least one of the splitting trigger conditions.

An example useful for understanding the present invention provides a cell merging apparatus. The apparatus includes a first receiving module, a first maintenance module, a first handover module and a first stopping module. The first receiving module is configured to receive a cell merging instruction sent by a first cell and used for instructing merging of the first cell and a second cell. The first maintenance module is configured to maintain a cell parameter of the second cell and a cell parameter of the first cell according to the cell merging instruction. The first handover module is configured to hand over user equipments (UEs) served by the second cell to a first shadow cell and synchronize information of the handed over UEs with the first cell, where the first shadow cell has the cell parameter of the first cell and is maintained by the second cell. The first stopping module is configured to stop maintaining the cell parameter of the second cell after all the UEs served by the second cell are handed over to the first shadow cell and it is determined that the information of all the handed over UEs is synchronized with the first cell.

Alternatively, the apparatus further includes a second receiving module and a first sending module. The second receiving module is configured to receive a cell merging request sent by the first cell and used for requesting merging of the first cell and the second cell. The first sending module is configured to send a cell merging response to the first cell, where the cell merging response carries cell information of the second cell. The cell information is used by the first cell to determine whether the second cell satisfies a merging condition for merging with the first cell.

Alternatively, the apparatus further includes a first determination module. The first determination module is configured to enable the first cell to determine whether one or more second cell satisfy a predetermined merging condition for merging with the first cell according to the cell merging responses sent by the one or more second cells, and to send the cell merging instruction to one or more second cells if the predetermined merging condition is satisfied.

Alternatively, the apparatus further includes a second determination module. The second determination module is configured to enable the first cell to determine whether at least one of the following merging trigger conditions is satisfied: a higher-priority UE satisfying a predetermined UE level enters the first cell, a level of a co-channel interference of the first cell reaches a predetermined level, and a number of UEs served by the first cell exceeds a predetermined threshold. The second determination module is configured to send the cell merging request used for requesting merging of the first cell and the second cell to the second cell if at least one of the merging trigger conditions is satisfied.

Another example useful for understanding the present invention provides a cell splitting apparatus. The apparatus includes a third receiving module, a second maintenance module, a second handover module and a second stopping module. The third receiving module is configured to receive a cell splitting instruction sent by a master cell portion (CP) of a merged cell and used for requesting splitting a secondary CP from the merged cell. The second maintenance module is configured to maintain a cell parameter of the merged cell and a cell parameter of a splitting cell split from the merged cell according to the cell splitting instruction. The second handover module is configured to hand over user equipments (UEs) served by the secondary CP to a second shadow cell, where the second shadow cell has the cell parameter of the splitting cell and is maintained by the secondary CP. The second stopping module is configured to stop maintaining the cell parameter of the merged cell after all the UEs served by the secondary CP are handed over to the second shadow cell.

Alternatively, the apparatus further includes a second sending module. The second sending module is configured to enable the master CP to determine the UEs served by the secondary CP, and to send information of the determined UEs served by the secondary CP to the secondary CP.

Alternatively, the apparatus further includes a third determination module. The third determination module is configured to enable the master CP to determine whether the merged cell satisfies at least one of the following splitting trigger conditions: a higher-priority UE satisfying a predetermined UE level leaves the merged cell, a level of a co-channel interference of the merged cell is lower than a predetermined level, and a number of UEs served by the merged cell is lower than a predetermined threshold. The third determination module is configured to send the cell splitting instruction used for requesting splitting the secondary CP from the merged cell to the secondary CP if the merged cell satisfies at least one of the splitting trigger conditions.

Another example useful for understanding the present invention provides a base station. The base station includes the apparatus of any one of the embodiments described above.

Another example useful for understanding the present invention provides a storage medium. The storage medium is configured to store program codes for executing steps described below. A cell merging instruction sent by a first cell and used for instructing merging of the first cell and a second cell is received. A cell parameter of the second cell and a cell parameter of the first cell are maintained according to the cell merging instruction. UEs served by the second cell are handed over to a first shadow cell and information of the handed over UEs is synchronized with the first cell, where the first shadow cell has the cell parameter of the first cell and is maintained by the second cell. After all the UEs served by the second cell are handed over to the first shadow cell and it is determined that the information of all the handed over UE is synchronized with the first cell, maintaining of the cell parameter of the second cell is stopped.

Alternatively, the storage medium is further configured to store program codes for executing steps described below. Before the cell merging instruction sent by the first cell and used for instructing merging of the first cell and the second cell is received, a cell merging request sent by the first cell and used for requesting merging of the first cell and a second cell is received, and a cell merging response is sent to the first cell. The cell merging response carries cell information of the second cell, where the cell information is used by the first cell to determine whether the second cell satisfies a merging condition for merging with the first cell.

Alternatively, the storage medium is further configured to store program codes for executing a step described below. The cell information includes at least one of: a number of UEs served by the second cell, indication information indicating whether the second cell has a higher-priority UE satisfying a predetermined UE level, and information for identifying a level of a co-channel interference suffered by the second cell and caused by other cells other than the second cell.

Alternatively, the storage medium is further configured to store program codes for executing a step described below. After the cell merging response is sent to the first cell, the first cell determines whether one or more second cells satisfy a predetermined merging condition for merging with the first cell according to the cell merging responses sent by the one or more second cells, and sends the cell merging instruction to one or more second cell if the predetermined merging condition is satisfied.

Alternatively, the storage medium is further configured to store program codes for executing steps described below. Before the cell merging request sent by the first cell and used for requesting merging of the first cell and the second cell is received, the first cell determines whether at least one of the following merging trigger conditions is satisfied: a higher-priority UE satisfying a predetermined UE level enters the first cell, a level of a co-channel interference of the first cell reaches the predetermined level, and a number of UEs served by the first cell exceeds the predetermined threshold; and the first cell sends the cell merging request used for requesting merging of the first cell and the second cell to the second cell if at least one of the merging trigger conditions is satisfied.

Another example useful for understanding the present invention provides a storage medium. The storage medium is configured to store program codes for executing steps described below. A cell splitting instruction sent by a master cell portion (CP) of a merged cell and used for requesting splitting a secondary CP from the merged cell is received. A cell parameter of the merged cell and a cell parameter of a splitting cell split from the merged cell are maintained according to the cell splitting instruction. UEs served by the secondary CP are handed over to a second shadow cell, where the second shadow cell has the cell parameter of the splitting cell and is maintained by the secondary CP. After all the UEs served by the secondary CP are handed over to the second shadow cell, maintaining of the cell parameter of the merged cell is stopped.

Alternatively, the storage medium is further configured to store program codes for executing a step described below. Before the cell splitting instruction sent by the master CP of the merged cell and used for requesting splitting the secondary CP from the merged cell, the master CP determines the UEs served by the secondary CP and sends information of the determined UEs served by the secondary CP to the secondary CP.

Alternatively, the storage medium is further configured to store program codes for executing a step described below. Before the cell splitting instruction sent by the master CP of the merged cell and used for requesting splitting the secondary CP from the merged cell is received, the master CP determines whether the merged cell satisfies at least one of the following splitting trigger conditions: a higher-priority UE satisfying a predetermined UE level leaves the merged cell, a level of a co-channel interference of the merged cell is lower than a predetermined level, and a number of UEs served by the merged cell is lower than a predetermined threshold; and the master CP sends the cell splitting instruction used for requesting splitting the secondary CP from the merged cell to the secondary CP if the merged cell satisfies at least one of the splitting trigger conditions.

In the present application, the cell merging instruction sent by the first cell and used for instructing merging of the first cell and the second cell is received; the cell parameter of the second cell and the cell parameter of the first cell are maintained according to the cell merging instruction; UEs served by the second cell are handed over to the first shadow cell and the information of the handed over UEs is synchronized with the first cell, where the first shadow cell has the cell parameter of the first cell and is maintained by the second cell; after all the UEs served by the second cell are handed over to the first shadow cell and it is determined that the information of all the handed over UEs is synchronized with the first cell, maintaining of the cell parameter of the second cell is stopped. When the above technical solutions are used, in a cell merging process, a cell to be merged maintains not only its own cell parameter but also a cell parameter of a cell to be merged with the cell, the cell to be merged stops maintaining its own cell parameter after all UEs of the cell to be merged are handed over to a merged cell, effectively solving the problem in the existing art that a UE is released in a multi-cell merging process and the state and traffic of the UE cannot be guaranteed and effectively ensuring that as many UEs as possible have the best state and traffic effect.

## BRIEF DESCRIPTION OF DRAWINGS

The drawings described herein are used to provide a further understanding of the present application and form a part of the present application. The exemplary embodiments and descriptions thereof in the present application are used to explain the present application and not to limit the present application in any improper way. In the drawings:

FIG. 1 is a block diagram of hardware of a mobile terminal for a cell merging method according to an embodiment of the present application;
FIG. 2 is a flowchart of a cell merging method according to an embodiment of the present application;
FIG. 3 is a flowchart of a cell splitting method;
FIG. 4 is a schematic diagram of multi-cell merging and splitting scenarios according to an embodiment of the present application;
FIG. 5 is a flowchart of a multi-cell dynamic merging method according to an embodiment of the present application;
FIG. 6 is a flowchart of a multi-cell dynamic splitting method;
FIG. 7 is a flowchart of a multi-cell merging method according to an application example of the present application;
FIG. 8 is a flowchart of a method for dynamically splitting a merged cell;
FIG. 9 is a block diagram of a cell merging apparatus according to an embodiment of the present application;
FIG. 10 is a block diagram 1 of a preferred structure of a cell merging apparatus according to an embodiment of the present application;
FIG. 11 is a block diagram 2 of a preferred structure of a cell merging apparatus according to an embodiment of the present application;
FIG. 12 is a block diagram 3 of a preferred structure of a cell merging apparatus according to an embodiment of the present application;
FIG. 13 is a block diagram of a cell splitting apparatus;
FIG. 14 is a block diagram 1 of a preferred structure of a cell splitting apparatus;
FIG. 15 is a block diagram 2 of a preferred structure of a cell splitting apparatus;
FIG. 16 is a block diagram of a base station according to an embodiment of the present application.

## DETAILED DESCRIPTION

The present application will be described hereinafter in detail with reference to the drawings in conjunction with embodiments. It is to be noted that if not in collision, the embodiments and features therein in the present application may be combined with each other.
It is to be noted that the terms "first", "second" and the like in the description, claims and drawings of the present application are used to distinguish between similar objects and are not necessarily used to describe a particular order or sequence.

Embodiment 1

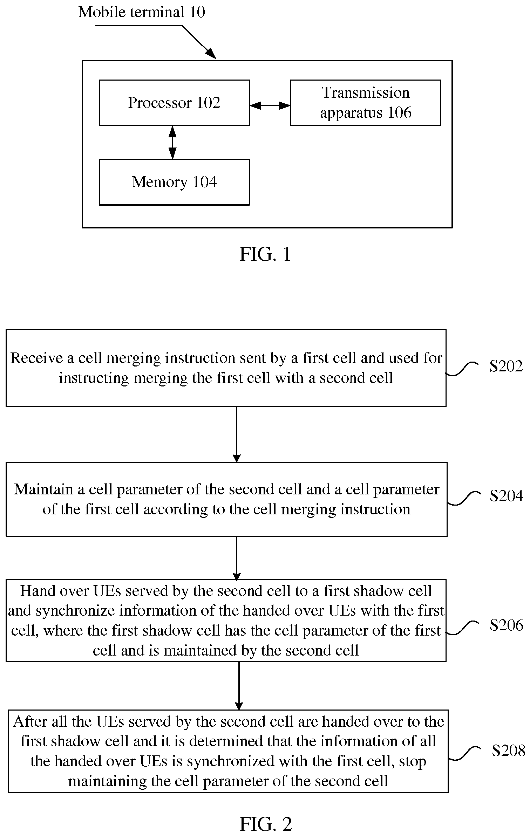

A method embodiment provided by the embodiment 1 of the present application may be executed in a mobile terminal, a computer terminal or other similar computing apparatuses. Taking the method embodiment to be executed in the mobile terminal with a cell function as an example, FIG. 1 is a block diagram of hardware of a mobile terminal for a cell merging method according to an embodiment of the present application. As shown in FIG. 1, a mobile terminal 10 may include one or more (only one processor is shown in FIG. 1) processors 102 (the processor 102 may include, but is not limited to, a processing apparatus such as a microcontroller unit (MCU) and a field programmable gate array (FPGA)), a memory 104 configured to store data, and a transmission apparatus 106 configured to implement a communication function. It should be understood by those skilled in the art that the structure shown in FIG. 1 is merely illustrative and not intended to limit the structure of the electronic apparatus described above. For example, the mobile terminal 10 may further include more or fewer components than the components shown in FIG. 1 or may have a configuration different from that shown in FIG. 1.

The memory 104 may be configured to store software programs and modules of application software, such as program instructions/modules corresponding to the cell merging method in the embodiments of the present application. The processor 102 executes the software programs and modules stored in the memory 104 to perform functional applications and data processing, that is, to implement the method described above. The memory 104 may include a high-speed random access memory, and may further include a nonvolatile memory, such as one or more magnetic storage apparatuses, flash memories or other nonvolatile solid-state memories. In some examples, the memory 104 may further include memories that are remotely disposed with respect to the processor 102. These remote memories may be connected to the mobile terminal 10 via a network. Examples of the preceding network include, but are not limited to, the Internet, an intranet, a local area network, a mobile communication network and a combination thereof.

The transmission apparatus 106 is configured to receive or transmit data via a network. Specific examples of such a network may include a wireless network provided by a communication provider of the mobile terminal 10. In one example, the transmission apparatus 106 includes a network interface controller (NIC), which may be connected to other network devices via a base station, thereby communicating with the Internet. In one example, the transmission apparatus 106 may be a radio frequency (RF) module, which is configured to communicate with the Internet in a wireless way.

A cell merging method executed in the above mobile terminal or network architecture is provided in this embodiment. FIG. 2 is a flowchart of the cell merging method according to an embodiment of the present application. As shown in FIG. 2, the method includes steps described below.

In step S202, a cell merging instruction sent by a first cell is received and the cell merging instruction is used for instructing merging of the first cell and a second cell.

In step S204, a cell parameter of the second cell and a cell parameter of the first cell are maintained according to the cell merging instruction.

In step S206, user equipments (UEs) served by the second cell are handed over to a first shadow cell and information of the handed over UEs is synchronized with the first cell, where the first shadow cell is a cell whose cell parameter is the same as the cell parameter of the first cell and is maintained by the second cell.

In step S208, after all the UEs served by the second cell are handed over to the first shadow cell and it is determined that the information of all the handed over UEs is synchronized with the first cell, maintaining of the cell parameter of the second cell is stopped.

In the above steps, two cells are merged into one logical cell, which eliminates co-channel interference and improves network performance. In the handover process, the logical cell functions as the serving cell before the handover and the serving cell after the handover so that the UE that is served before handover is not released, thereby effectively solving the problem in the existing art that the state and traffic of the UE cannot be guaranteed in the multi-cell merging process since the UE is released, preventing the UE from being released in the multi-cell merging process, and effectively ensuring the state and traffic of the UE.

To perform more efficient cell merging and help the first cell to determine whether the second cell satisfies a merging condition, that is, to find out the second cell likely to be merged, the second cell may feed back a cell situation of the second cell to the first cell. For example, before receiving the cell merging instruction sent by the first cell and used for instructing merging of the first cell and the second cell, the second cell receives a cell merging request sent by the first cell and used for requesting merging of the first cell and the second cell and sends a cell merging response to the first cell. The cell merging response carries cell information of the second cell, where the cell information is used by the first cell to determine whether the second cell satisfies the merging condition for merging with the first cell.

The cell information may include multiple kinds of information, for example, may include at least one of: the number of UEs served by the second cell, indication information indicating whether the second cell has a higher-priority UE satisfying a predetermined UE level, and information for identifying a level of a co-channel interference suffered by the second cell caused by other cells other than the second cell.

Optionally, after the cell merging response is sent to the first cell, the first cell determines whether one or more second cells satisfy a predetermined merging condition for merging with the first cell according to the cell merging responses sent by the one or more second cells, and sends the cell merging instruction to the one or more second cells if the predetermined merging condition is satisfied. It is to be noted that the first cell may perform the corresponding determination in conjunction with one piece of cell information or multiple pieces of cell information of the second cells. For example, the first cell may determine, for each of the second cells respectively, whether the number of UEs served by the second cell exceeds a predetermined threshold, or whether the total number of UEs served by the first cell and the second cell exceeds a predetermined threshold, or whether the second cell has the higher-priority UE satisfying the predetermined UE level, or whether a co-channel interference of the second cell reaches a predetermined level. Multiple second cells may be ranked by determining whether the multiple second cells are suitable to be merged in conjunction with the multiple pieces of cell information of the second cells, and the second cell which ranks ahead is preferentially selected for merging.

Optionally, before the cell merging request sent by the first cell and used for requesting merging of the first cell and the second cell is received, the method further includes that the first cell determines whether at least one of the following merging trigger conditions is satisfied: the higher-priority UE satisfying the predetermined UE level enters the first cell, a level of a co-channel interference of the first cell reaches the predetermined level, and the number of UEs served by the first cell exceeds the predetermined threshold; and that the first cell sends the cell merging request used for requesting merging of the first cell and the second cell to the second cell if at least one of the merging trigger conditions is satisfied.

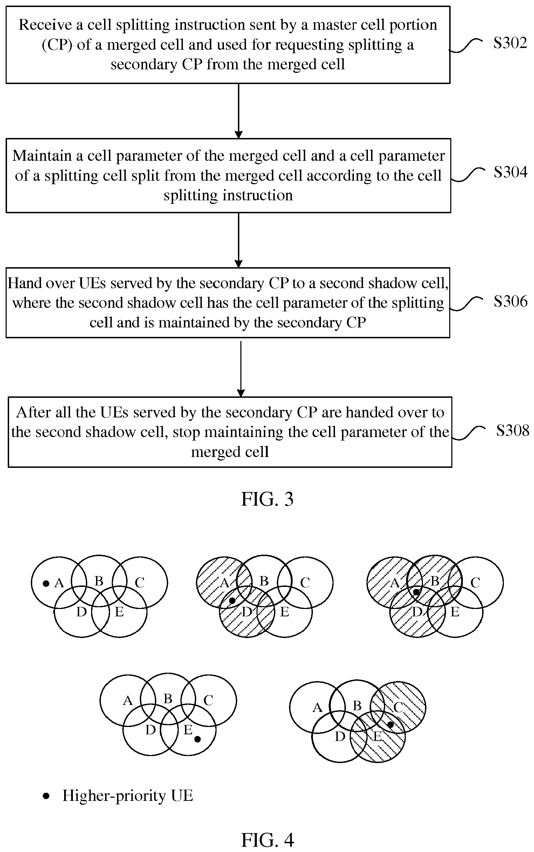

Another example useful for understanding the present invention provides a cell splitting method. FIG. 3 is a flowchart of a cell splitting method according to an embodiment of the present application. As shown in FIG. 3, the method includes steps described below.

In step S302, a cell splitting instruction sent by a master cell portion (CP) of a merged cell is received and the cell splitting instruction is used for requesting for splitting a secondary CP from the merged cell.

In step S304, a cell parameter of the merged cell and a cell parameter of a splitting cell which is split from the merged cell are maintained according to the cell splitting instruction.

In step S306, user equipments (UEs) served by the secondary CP are handed over to a second shadow cell, where the second shadow cell has the cell parameter of the splitting cell and is maintained by the secondary CP.

In step S308, after all the UEs served by the secondary CP are handed over to the second shadow cell, maintaining of the cell parameter of the merged cell is stopped.

In the above steps, when the merged cell is split, the merged cell functions as the serving cell before the handover and the serving cell after the handover in the handover process so that the UE served before handover is not released, thereby effectively solving the problem in the existing art that the state and traffic of the UE cannot be guaranteed in the multi-cell merging process since the UE is released, preventing the UE from being released in the multi-cell merging process, and effectively ensuring the state and traffic of the UE.

Optionally, before receiving the cell splitting instruction sent by the master CP of the merged cell and used for requesting the secondary CP to be split from the merged cell, the master CP determines the UE served by the secondary CP and sends information of the determined UE served by the secondary CP to the secondary CP. Through this step, the master CP informs the secondary CP of the UE to be handed over so that the secondary CP may make full preparations for handing over the UE.

Correspondingly, before receiving the cell splitting is performed, some trigger conditions may be set for cell splitting. For example, before the cell splitting instruction sent by the master CP of the merged cell and used for requesting splitting the secondary CP from the merged cell, the master CP determines whether the merged cell satisfies at least one of the following splitting trigger conditions: a higher-priority UE satisfying a predetermined UE level leaves the merged cell, a level of a co-channel interference of the merged cell is lower than a predetermined level, and the number of UEs served by the merged cell is lower than a predetermined threshold. The master CP sends the cell splitting instruction used for requesting splitting the secondary CP from the merged cell to the secondary CP if the merged cell satisfies at least one of the splitting trigger conditions.

It is to be noted that the preceding cell merging or splitting solution may be applied to cells corresponding to one base station, and may also be applied to cells corresponding to different base stations. When the cell merging or splitting solution is applied to the same base station, interactions between cells, for example, sending the cell merging or splitting instruction, sending the handover request, receiving the cell merging or splitting instruction, and receiving the handover request, are not necessary. When the cell merging or splitting solution is applied to different base stations, the interactions between cells may be implemented by air interface resources between the base stations or physical connections between the base stations, which may be determined according to needs.

With reference to the preceding embodiments, examples of the present application will be described below in conjunction with specific cell merging or splitting scenarios.

For a lack of flexibility of the cell merging and splitting technology in the existing art, the embodiments of the present application provide a multi-cell merging and splitting solution, which is applied to a networking scenario in which multiple cells are dynamically split and merged, so that the multi-cell merging and splitting has more flexibility and the traffic state of the UE in the cell merging and splitting process is guaranteed as much as possible.

The multi-cell dynamic merging and splitting methods provided by the examples of the present application improve the network performance and eliminate the co-channel interference as much as possible and reduce abnormal release of the UE in the multi-cell merging and splitting process.

FIG. 4 is a schematic diagram of multi-cell merging and splitting scenarios according to an example of the present application. As shown in FIG. 4, there are five cells, namely, a cell A, a cell B, a cell C, a cell D, and a cell E.

With reference to FIG. 4, the general process of the multi-cell dynamic merging and splitting method in the embodiments of the present application is described below.

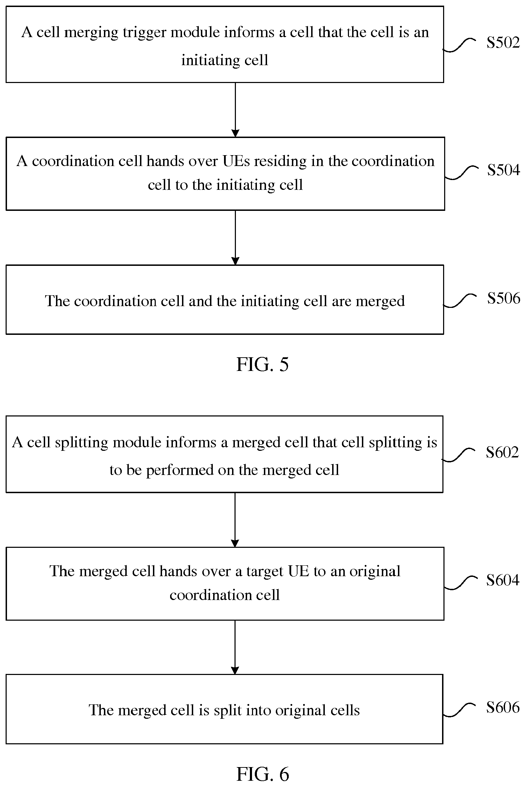

FIG. 5 is a flowchart of a multi-cell dynamic merging method according to an embodiment of the present application. As shown in FIG. 5, the multi-cell dynamic merging method includes steps described below.

In step S502, an event triggers multi-cell merging.

In step S504, a coordination cell hands over a UE in the coordination cell to an initiating cell. (It is to be noted that a common cell that receives a "cell merging request" is referred to as the "coordination cell" (i.e., the above second cell), and a common cell which first actively initiates the "cell merging request" is referred to as the "initiating cell" (i.e., the above first cell)).

In step S506, the coordination cell performs cell merging with the initiating cell.

FIG. 6 is a flowchart of a multi-cell dynamic splitting method according to an example useful for understanding the present invention.

As shown in FIG. 6, the multi-cell dynamic splitting method includes steps described below.

In step S602, an event triggers cell splitting.

In step S604, a merged cell hands over a target UE to an original coordination cell.

In step S606, the merged cell is split into common cells.

Based on the above general processes, the multi-cell dynamic merging and the multi-cell dynamic splitting according to the examples of the present application are respectively described below.

Multi-cell dynamic merging:
In the following description, the cell which first actively initiates the "cell merging request" is referred to as the "initiating cell" and the cell to be merged is referred to as the "coordination cell". In the multi-cell dynamic merging process, only one initiating cell exists, and multiple coordination cells may exist. An upper limit of the specific quantity of the coordination cells needs to be determined by taking practical application scenarios into consideration. One coordination cell is taken as an example to describe the multi-cell dynamic merging method below, the merging method for multiple coordination cells is the same and is not be repeated herein.

In step 1, the cell merging is triggered.

Cell merging of a cell merging module is triggered by the event. A trigger event is, for example, a higher-priority UE entering, a cell capacity reaching a certain threshold, and a level of a co-channel interference reaching a certain level. The event for triggering the cell merging may be one event or a combination of multiple events. The specific trigger event is not limited to the events mentioned in the embodiments of the present application. After the cell merging is triggered by the event, a cell merging trigger module informs a corresponding cell for serving as the initiating cell.

In step 2, the initiating cell initiates the "cell merging request".

The initiating cell initiates the "cell merging request" to the coordination cell to be merged.

In step 3, the coordination cell responds to the initiating cell with a "cell merging response".

After receiving the "cell merging request" from the initiating cell, the coordination cell responds to the initiating cell with the "cell merging response". The "cell merging response" carries parameters related to the coordination cell, for example, the number of users in a connected state.

In step 4, the initiating cell determines whether to merge the coordination cell.

The initiating cell determines whether the coordination cell satisfies the merging condition according to factors such as the number of users reported by the coordination cell. If the coordination cell does not satisfy the merging condition, the initiating cell sends a "cell merging cancellation instruction" to the coordination cell. If the coordination cell satisfies the merging condition, the initiating cell sends a "cell merging instruction", which carries a cell parameter of the initiating cell, to the coordination cell. A determination manner in this step corresponds to the cell merging trigger event in step 1, for example, whether the number of users in the coordination cell exceeds a threshold and a coordination cell measurement ranking reported by the higher-priority UE. The determination method in this step may be one event or a combination of multiple events, but is not limited to the preceding method.

In step 5, the coordination cell transmits two different cell signals.

If the coordination cell receives the "cell merging cancellation instruction", the cell merging is no longer performed and the original cell parameters are maintained for operation. If the coordination cell receives the "cell merging instruction", the coordination cell stops accepting access of a new user and sends the same reference signal (RS), primary synchronization signal (PSS), secondary synchronization signal (SSS), master information block (MIB), system information block (SIB) and the like as those of the initiating cell, and the coordination cell keeps the transmission of the cell signal and data. The coordination cell actually maintains two sets of cell parameters. At this time, the coordination cell is no longer one cell but is the coexistence of both the initiating cell and the coordination cell. In this patent, the initiating cell maintained by the coordination cell is referred to as a shadow cell of the initiating cell, which is simply referred to as the shadow cell below.

In step 6, the coordination cell hands over the users connected to the coordination cell to the shadow cell.

The coordination cell as a source cell initiates a handover request to the shadow cell, and tries to hand over all UEs in the present cell to the shadow cell. The handover process is performed in strict accordance with provisions in the LTE protocol. Reconfiguration signaling sent by the coordination cell to the UE includes a preamble index and related radio parameters. A specific signaling format may refer to section 6.3.4 of LTE 36.331. The coordination cell preferentially initiates a non-contention handover request to the UE. The coordination cell initiates a contention handover request when preamble resources are insufficient.

In step 7, the shadow cell becomes a CP of a merged cell.

The shadow cell sends information of the handed over UEs with the initiating cell. When the coordination cell sends the handover request to the last UE, the coordination cell makes a backup of its own cell parameter and sends a "cell merging ending indication" to the initiating cell and stops sending all the signals and data of the coordination cell. At this time, the coordination cell stops providing services, the shadow cell functions as a secondary CP of the merged cell, and the initiating cell is a master CP. The secondary CP demodulates data and responds to a connection request of a new user according to the control of the master CP.

Dynamic splitting of a merged cell

The following description is made by using an example in which a merged cell including two CPs is split. The strategy of splitting a merged cell including more than two CPs is same and not repeated herein.

In step 1, cell splitting is triggered.

This step is similar to step 1 of the multi-cell dynamic merging. After the cell splitting is triggered by an event, a cell splitting trigger module informs a mater CP for initiating a "cell splitting request".

In step 2, the master CP initiates the "cell splitting request".

The master CP initiates the "cell splitting request" to the secondary CP, and the merged cell does not respond to the access request of any new UE. Based on an activation set maintained for each UE, the master CP selects UEs which are activated by a single CP and whose UE-level master CP is the secondary CP as the target UEs, and sends parameters related to those target UEs to the corresponding secondary CP.

In step 3, the secondary CP transmits two different cell signals.

If the secondary CP receives the "cell splitting request" from the master CP, the secondary CP sends the same RS, PSS, SSS, MIB, SIB and the like as those of an original coordination cell, and also keeps sending signals and data of the merged cell. At this stage, the secondary CP actually maintains two sets of cell parameters, and the secondary CP is coexistence of the merged cell and the coordination cell.

In step 4, the merged cell hands over the target UEs to the coordination cell.

The merged cell as a source cell initiates a handover request to the coordination cell, and tries to hand over all the target UEs in the cell to the coordination cell. The handover process is the same as step 6 of the multi-cell dynamic merging.

In step 5, the merged cell is split into common cells.

After the merged cell sends the handover request to the last target UE, the secondary CP no longer sends any signal and data of the merged cell. At this time, the merged cell stops providing services, and the secondary CP and the master CP function as the common cells again. The secondary CP and the master CP send RSs, demodulate data, and respond to a connection request of a new user according to the original cell parameters.

Compared with the cell merging technology in the related art, the multi-cell merging and splitting methods in the examples described above are more flexible and real-time, and solve the problem in the related art that a state and traffic of a UE cannot be guaranteed in the multi-cell merging and splitting processes.

With reference to the preceding examples, application examples of the multi-cell merging and splitting methods are respectively described below in conjunction with specific scenarios.

It is to be noted that if not in collision, the embodiments and features therein in the present application may be combined with each other.

The present application will be described below in detail with reference to the drawings in conjunction with application examples. It is to be noted that application examples 1 and 2 are merely cell merging and splitting scenarios triggered by entering and leaving of a higher-priority UE, but it is not limited thereto.

Application example 1

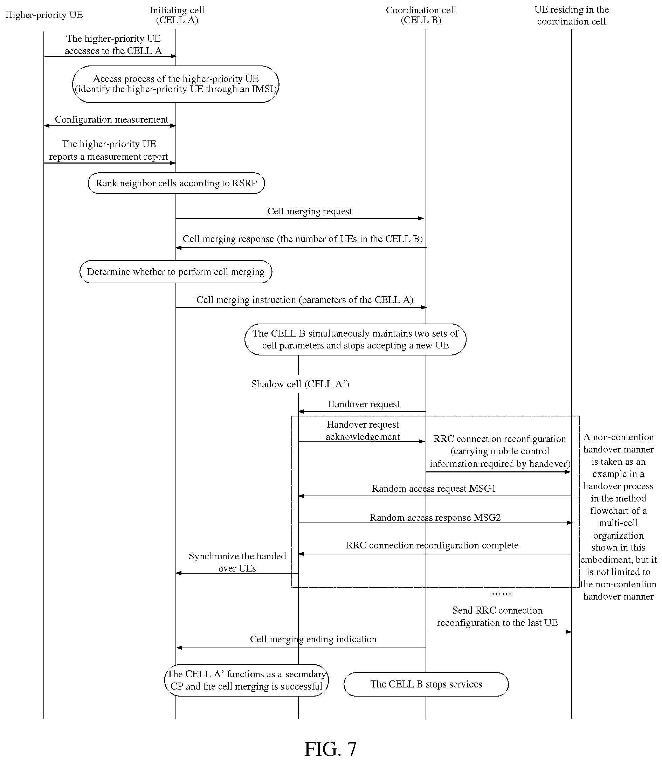

FIG. 7 is a flowchart of a multi-cell merging method according to an application example of the present application. As shown in FIG. 7, the method includes steps described below.

Scenario description: A higher-priority UE enters multi-floor dense co-channel cells.

In step S1, the higher-priority UE accesses to a CELL A, and the CELL A recognize the higher-priority UE using an IMSI identification technology.

In step S2, the CELL A delivers reconfiguration signaling to the higher-priority UE according to a pre-configured neighbor cell. The reconfiguration signaling includes a measurement object, a measurement event, and a measurement report. In the application example of this patent, the CELLA delivers an A4 event to the higher-priority UE.

The meaning of the A4 event is that the neighboring cell is better than an absolute threshold.

A formula of the A4 event is written as:

$$Mn + Ofn + Ocn - Hys > Thresh.$$

Parameter meanings and application examples of the formula are described below.

Mn represents a measurement result of reference signal received power (SRPR) of the neighbor cell.

Thresh represents a threshold parameter of the A4 event and is set to -100db in the application example.

Ofn represents a frequency-specific deviation of the neighbor cell and is set to 0db in the application example.

Ocn represents a personality offset of the neighbor cell, is used for controlling a priority of a target cell, and is set to 0db in the application example.

Hys represents a hysteresis parameter of the A4 event and is set to 0db in the application example.

The following parameters are to be configured in the measurement report of the A4 event.

TimeToTrigger represents a time difference between event occurrence and the report and is set to 320 ms in the application example.

maxCellReport represents the number of neighbor cells reported and is 8 in the application example.

ReportInterval represents an interval of periodic reports triggered by events and is 1024 ms in the application example.

ReportAmount represents report the number of the periodic reports triggered by events and is 4 in the application example.

In step S3, in the mobile process, the higher-priority UE triggers the A4 event according to the configuration in step S2 and continuously reports the measurement report multiple times during the A4 event.

In step S4, the CELL A has continuously received the A4 measurement report reported by the higher-priority UE three times, ranks the reporting neighbor cells according to the RSRP, and initiates a "cell merging request" to the top five neighbor cells.

In step S5, after receiving the "cell merging request", a coordination cell CELL B encapsulates information such as the number of UEs in the cell in a "cell merging response" and sends the "cell merging response" to the CELL A.

In step S6: after receiving the "cell merging request" from multiple coordination cells including the CELL B, the CELL A calculates whether a sum of the number of UEs in the CELLA and the number of UEs in all the coordination cells exceeds a maximum UE capacity of a merged cell. If the sum exceeds the maximum UE capacity, the neighboring coordination cells are ranked and the lower-ranked coordination cells are excluded until the total number of UEs in the remaining coordination cells does not exceed the maximum UE capacity. A "cell merging cancellation instruction" is sent to the excluded coordination cells, and the "cell merging instruction" is sent to the coordination cells that satisfy the condition.

In step S7, in the application example, assuming that the CELL B receives the "cell merging instruction", the CELL B immediately makes a backup of its own cell parameters and stops processing the access request of any new UE. While sending the original cell signal, the CELL B starts sending signals of the CELL A, that is, signals of a shadow cell CELL A'.

In step S8, according to provisions in the LTE protocol, UEs in the CELL B are handed over to the CELL A'.

In step S9, the CELL A' synchronizes information of each UE that is handed over to CELL A' with the CELL A.

In step S10, after the CELL B sends the handover request to the last UE in the CELL B, the CELL B sends a "cell merging ending indication" to the CELL A and no longer sends signals and data of the CELL B.

In step S11, after the CELL A receives the "cell merging ending indication" sent by the CELL B and confirms the end of the merging, the CELL A' functions as a secondary CP of the merged cell, and the CELL A functions as a master CP of the merged cell and maintains and schedules all UEs in the merged cell.

Application example 2

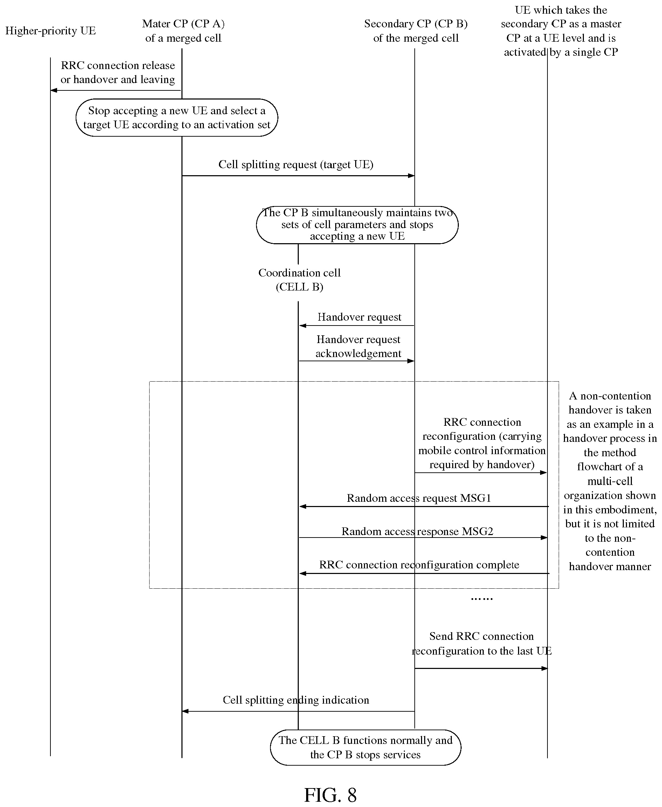

FIG. 8 is a flowchart of a method for dynamically splitting a merged cell according to an example useful for understanding the present invention of the present application. As shown in FIG. 8, the method includes steps described below.

Scenario description: A higher-priority UE leaves a merged cell.

In step S1, when the higher-priority UE is handed over from the merged cell to other cells, the merged cell stops processing an access request of a new UE and selects a target UE which takes a CP B as a master CP at a UE level and is activated by a single CP according to an uplink activation set. A master CP A initiates a "cell splitting request" to the CP B, which carries parameters related to the target UE of the CP B.

In step S2, after the secondary CP B receives the "cell splitting request", the CP B sends signals of an original coordination cell CELL B while sending signals of the merged cell.

In step S3, according to provisions in the LTE protocol, the CP B hands over the target UE to the coordination cell.

In step S4, after the CP B sends a handover request to the last target UE, the CP B sends a "cell splitting ending indication" to the CP A, and then immediately stops services, and sends only the signals of the coordination cell. At this time, the CP B has quit the services, functions as the CELL B again and starts accepting the access request of the new UE.

Compared with the related art, the cell merging and splitting in the preceding application examples are more flexible and real-time, and guarantee the traffic and state of the UE in the cell splitting and merging processes as much as possible.

From the description of the embodiments described above, it will be apparent to those skilled in the art that the methods in the embodiments described above may be implemented by software plus a necessary general-purpose hardware platform, or may of course be implemented by hardware. However, in many cases, the former is a preferred implementation mode. Based on this understanding, the solutions provided by the present application substantially, or the part contributing to the existing art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, a network device, etc.) to execute the method according to each embodiment of the present application.

Embodiment 2

This embodiment further provides a cell merging apparatus. The apparatus is configured to implement the above-mentioned embodiments and preferred embodiments. What has been described will not be repeated. As used below, the term "module" may be software, hardware or a combination thereof capable of implementing predetermined functions. The apparatus in the embodiment described below is preferably implemented by software, but implementation by hardware or by a combination of software and hardware is also possible and conceived.

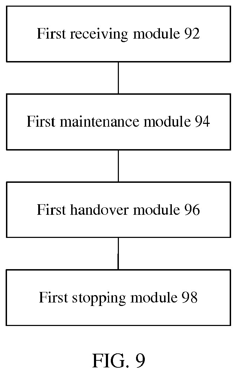

FIG. 9 is a block diagram of a cell merging apparatus according to an embodiment of the present application. As shown in FIG. 9, the apparatus includes a first receiving module 92, a first maintenance module 94, a first handover module 96 and a first stopping module 98. The apparatus is described below.

The first receiving module 92 is configured to receive a cell merging instruction sent by a first cell and used for instructing merging of the first cell and a second cell. The first maintenance module 94 is connected to the first receiving module 92 and configured to maintain a cell parameter of the second cell and a cell parameter of the first cell according to the cell merging instruction. The first handover module 96 is connected to the first maintenance module 94 and configured to hand over user equipments (UEs) served by the second cell to a first shadow cell and synchronize information of the handed over UEs with the first cell, where the first shadow cell has the cell parameter of the first cell and is maintained by the second cell. The first stopping module 98 is connected to the first handover module 96 and configured to stop maintaining the cell parameter of the second cell after all the UEs served by the second cell are handed over to the first shadow cell and it is determined that the information of all the handed over UEs is synchronized with the first cell.

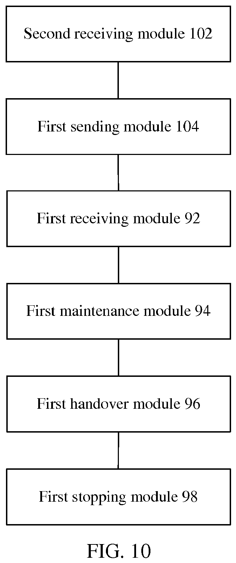

FIG. 10 is a preferred block diagram 1 of a cell merging apparatus according to an embodiment of the present application. As shown in FIG. 10, in addition to the structure shown in FIG. 9, the apparatus further includes a second receiving module 102 and a first sending module 104. The preferred structure is described below.

The second receiving module 102 is configured to receive a cell merging request sent by the first cell and the cell merging request is used for requesting merging of the first cell and the second cell. The first sending module 104 is connected to the second receiving module 102 and the first receiving module 92, and is configured to send a cell merging response to the first cell. The cell merging response carries cell information of the second cell, where the cell information is used by the first cell to determine whether the second cell satisfies a merging condition for merging with the first cell.

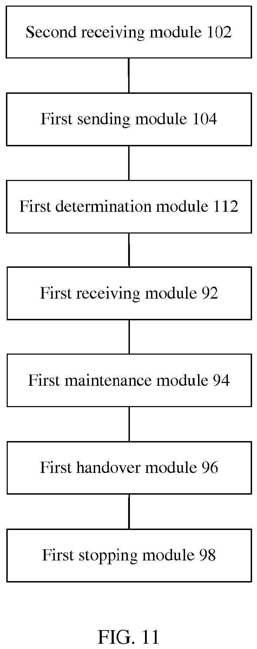

FIG. 11 is a preferred block diagram 2 of a cell merging apparatus according to an embodiment of the present application. As shown in FIG. 11, in addition to the structure shown in FIG. 10, the apparatus further includes a first determination module 112. The first determination module 112 is described below.

The first determination module 112 communicates with the first sending module 104 and the first receiving module 92, and is configured to cause the first cell to determine whether one or more second cells satisfy a predetermined merging condition for merging with the first cell according to the cell merging response sent by the one or more second cells, and cause the first cell to send the cell merging instruction to the one or more second cells if the predetermined merging condition is satisfied.

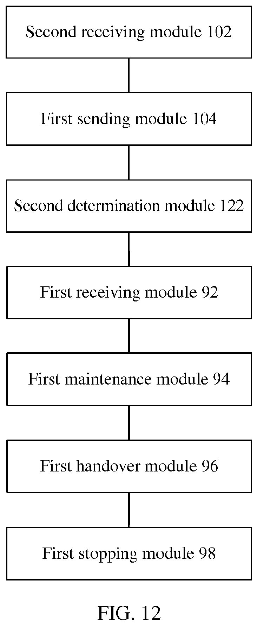

FIG. 12 is a preferred block diagram 3 of a cell merging apparatus according to an embodiment of the present application. As shown in FIG. 12, in addition to the structure shown in FIG. 10, the apparatus further includes a second determination module 122. The first determination module 122 is described below.

The second determination module 122 communicates with the first receiving module 92, and is configured to cause the first cell to determine whether at least one of the following merging trigger conditions is satisfied: a higher-priority UE satisfying a predetermined UE level enters the first cell, a level of a co-channel interference suffered by the first cell reaches a predetermined level, and the number of UEs served by the first cell exceeds a predetermined threshold; and cause the first cell to send the cell merging request used for requesting merging of the first cell and the second cell to the second cell if at least one of the merging trigger conditions is satisfied.

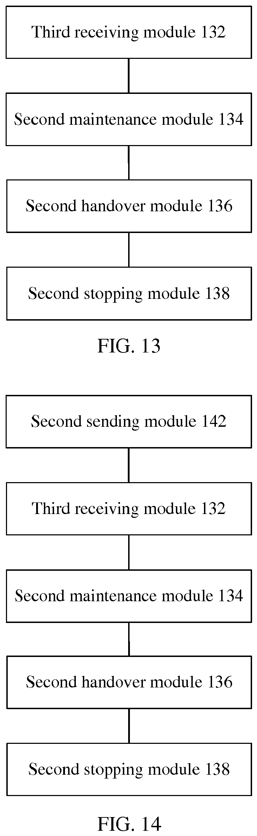

FIG. 13 is a block diagram of a cell splitting apparatus according to an example useful for understanding the present invention.

As shown in FIG. 13, the apparatus includes a third receiving module 132, a second maintenance module 134, a second handover module 136 and a second stopping module 138. The apparatus is described below.

The third receiving module 132 is configured to receive a cell splitting instruction sent by a master cell portion (CP) of a merged cell. The cell splitting instruction used for requesting for splitting a secondary CP from the merged cell. The second maintenance module 134 is connected to the third receiving module 132 and configured to maintain a cell parameter of the merged cell and a cell parameter of a splitting cell split from the merged cell according to the cell splitting instruction. The second handover module 136 is connected to the second maintenance module 134 and configured to handover a user equipment (UE) served by the secondary CP to a second shadow cell, where the second shadow cell has the cell parameter of the splitting cell and is maintained by the secondary CP. The second stopping module 138 is connected to the second switching module 136 and configured to stop maintaining of the cell parameter of the merged cell after all the UEs served by the secondary CP are handed over to the second shadow cell.

FIG. 14 is a preferred block diagram 1 of a cell splitting apparatus according to an example useful for understanding the present invention.

As shown in FIG. 14, in addition to the structure shown in FIG. 13, the apparatus further includes a second sending module 142. The second sending module 142 is described below.

The second sending module 142 communicates with the third receiving module 132, and is configured to cause the master CP to determine the UEs served by the secondary CP, and cause the master CP to send information of the determined UEs served by the secondary CP to the secondary CP.

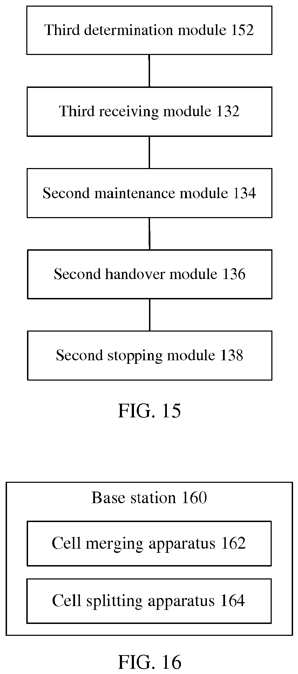

FIG. 15 is a preferred block diagram 2 of a cell splitting apparatus according to an example useful for understanding the present invention.

As shown in FIG. 15, in addition to the structure shown in FIG. 13, the apparatus further includes a third determination module 152. The third determination module 152 is described below.

The third determination module 152 communicates with the third receiving module 132, and is configured to cause the master CP to determine whether the merged cell satisfies at least one of the following splitting trigger conditions: a higher-priority UE satisfying a predetermined UE level leaves the merged cell, a level of a co-channel interference of the merged cell is lower than a predetermined level, and the number of UEs served by the merged cell is lower than a predetermined threshold; and cause the master CP to send the cell splitting instruction to the secondary CP if the merged cell satisfies at least one of the splitting trigger conditions, where the cell splitting instruction is used for requesting for splitting the secondary CP from the merged cell.

FIG. 16 is a block diagram of a base station according to an embodiment of the present application. As shown in FIG. 16, a base station 160 includes the cell merging apparatus 162 and/or the cell splitting apparatus 164 according to any one of the embodiments described above.

It is to be noted that the various modules described above may be implemented by software or hardware. Implementation by hardware may, but may not necessarily, be performed in the following manners: the various modules described above are located in a same processor, or the various modules described above are located in their respective processors in any combination form.

An example useful for understanding the present invention provides a storage medium. Optionally, in this embodiment, the storage medium may be configured to store program codes for executing steps described below.

In step S1, a cell merging instruction sent by a first cell and used for instructing merging of the first cell and a second cell is received.

In step S2, a cell parameter of the second cell and a cell parameter of the first cell are maintained according to the cell merging instruction.

In step S3, user equipments (UEs) served by the second cell are handed over to a first shadow cell and information of the handed over UEs is synchronized with the first cell, where the first shadow cell has the cell parameter of the first cell and is maintained by the second cell.

In step S4, after all the UEs served by the second cell are handed over to the first shadow cell and it is determined that the information of all the handed over UEs is synchronized with the first cell, maintaining of the cell parameter of the second cell is stopped.

Alternatively, the storage medium is further configured to store program codes for executing steps described below.

Before the cell merging instruction sent by the first cell and used for instructing merging of the first cell and the second cell is received, the steps described below are further included.

In step S1, a cell merging request sent by the first cell and used for requesting merging of the first cell and a second cell is received.

In step S2, a cell merging response is sent to the first cell. The cell merging response carries cell information of the second cell, where the cell information is used by the first cell to determine whether the second cell satisfies a merging condition for merging with the first cell.

Alternatively, the storage medium is further configured to store program codes for executing a step described below.

In step S1, the cell information includes at least one of: the number of UEs served by the second cell, indication information indicating whether the second cell has a higher-priority UE satisfying a predetermined UE level, and information for identifying an interference level of a co-channel interference suffered by the second cell and caused by other cells other than the second cell.

Alternatively, the storage medium is further configured to store program codes for executing a step described below.

After the cell merging response is sent to the first cell, the step described below is further included.

In step S1, the first cell determines whether one or more second cells satisfy a predetermined merging condition for merging with the first cell according to the cell merging response sent by the one or more second cells, and sends the cell merging instruction to the one or more second cells if the predetermined merging condition is satisfied.

Alternatively, the storage medium is further configured to store program codes for executing a step described below.

Before the cell merging request sent by the first cell and used for requesting merging of the first cell and the second cell is received, the step described below is further included.

In step S1, the first cell determines whether at least one of the following merging trigger conditions is satisfied: a higher-priority UE satisfying a predetermined UE level enters the first cell, a level of a co-channel interference of the first cell reaches a predetermined level, and a number of UEs served by the first cell exceeds a predetermined threshold; and the first cell sends the cell merging request used for requesting merging of the first cell and the second cell to the second cell if at least one of the merging trigger conditions is satisfied.

Another example useful for understanding the present invention provides a storage medium. The storage medium is configured to store program codes for executing steps described below.

In step S1, a cell splitting instruction sent by a master cell portion (CP) of a merged cell is received and the cell splitting instruction is used for requesting for splitting a secondary CP from the merged cell.

In step S2, a cell parameter of the merged cell and a cell parameter of a splitting cell split from the merged cell are maintained according to the cell splitting instruction.

In step S3, user equipments (UEs) served by the secondary CP are handed over to a second shadow cell, where the second shadow cell has the cell parameter of the splitting cell and is maintained by the secondary CP.

In step S4, after all the UEs served by the secondary CP are handed over to the second shadow cell, maintaining of the cell parameter of the merged cell is stopped.

Alternatively, the storage medium is further configured to store program codes for executing a step described below.

Before the cell splitting instruction sent by the master CP of the merged cell and used for requesting the secondary CP to be split from the merged cell is received, the step described below is further included.

In step S1, the master CP determines the UEs served by the secondary CP, and sends information of the determined UEs served by the secondary CP to the secondary CP.

Alternatively, the storage medium is further configured to store program codes for executing a step described below.

Before the cell splitting instruction sent by the master CP of the merged cell and used for requesting splitting the secondary CP from the merged cell is received, the step described below is further included.

In step S1, the master CP determines whether the merged cell satisfies at least one of the following splitting trigger conditions: a higher-priority UE satisfying a predetermined UE level leaves the merged cell, a level of a co-channel interference of the merged cell is lower than a predetermined level, and the number of UEs served by the merged cell is lower than a predetermined threshold; and the master CP sends the cell splitting instruction used for requesting for splitting the secondary CP from the merged cell to the secondary CP if the merged cell satisfies at least one of the splitting trigger conditions.

Alternatively, in this example, the storage medium described above may include, but is not limited to, a USB flash disk, a read-only memory (ROM), a random access memory (RAM), a mobile hard disk, a magnetic disk, an optical disk or another medium capable of storing program codes.

Alternatively, in this example, a processor performs, according to program codes stored in a storage medium, steps described below. The processor receives a cell merging instruction sent by a first cell and used for instructing merging of the first cell and a second cell. The processor maintains a cell parameter of the second cell and a cell parameter of the first cell according to the cell merging instruction. UEs served by the second cell are handed over to a first shadow cell and information of the handed over UEs is synchronized with the first cell, where the first shadow cell has the cell parameter of the first cell and is maintained by the second cell. After all the UEs served by the second cell are handed over to the first shadow cell and it is determined that the information of all the handed over UEs is synchronized with the first cell, maintaining of the cell parameter of the second cell is stopped.

Alternatively, in this example, the processor performs, according to program codes stored in the storage medium, steps described below. Before the cell merging instruction sent by the first cell and used for instructing merging of the first cell and the second cell is received, a cell merging request sent by the first cell and used for requesting merging of the first cell and a second cell is received, and a cell merging response is sent to the first cell. The cell merging response carries cell information of the second cell, where the cell information is used by the first cell to determine whether the second cell satisfies a merging condition for merging with the first cell.

Alternatively, in this example, the processor performs, according to program codes stored in the storage medium, a step described below. The cell information includes at least one of: the number of UEs served by the second cell, indication information indicating whether the second cell has a higher-priority UE satisfying a predetermined UE level, and information for identifying an interference level of a co-channel interference suffered by the second cell under caused by other cells other than the second cell.

Alternatively, in this example, the processor performs, according to program codes stored in the storage medium, a step described below. After the cell merging response is sent to the first cell, the first cell determines whether one or more second cells satisfy a predetermined merging condition for merging with the first cell according to the cell merging responses sent by the one or more second cells, and sends the cell merging instruction to the one or more second cells if the predetermined merging condition is satisfied.

Alternatively, in this example, the processor performs, according to program codes stored in the storage medium, a step described below. Before the cell merging request sent by the first cell and used for requesting merging of the first cell and the second cell is received, the first cell determines whether at least one of the following merging trigger conditions is satisfied: a higher-priority UE satisfying a predetermined UE level enters the first cell, a level of a co-channel interference of the first cell reaches the predetermined level, and the number of UEs served by the first cell exceeds the predetermined threshold; and the first cell sends the cell merging request used for requesting merging of the first cell and the second cell to the second cell if at least one of the merging trigger conditions is satisfied.

Another example useful for understanding the present invention provides a processor. The processor performs, according to program codes stored in a storage medium, steps described below. A cell splitting instruction sent by a master cell portion (CP) of a merged cell and used for requesting for splitting a secondary CP from the merged cell is received. A cell parameter of the merged cell and a cell parameter of a splitting cell split from the merged cell are maintained according to the cell splitting instruction. UEs served by the secondary CP are handed over to a second shadow cell, where the second shadow cell has the cell parameter of the splitting cell and is maintained by the secondary CP. After all the UEs served by the secondary CP are handed over to the second shadow cell, maintaining of the cell parameter of the merged cell is stopped.

Alternatively, in this example, the processor performs, according to program codes stored in the storage medium, a step described below. Before the cell splitting instruction sent by the master CP of the merged cell and used for requesting for splitting the secondary CP from the merged cell, the master CP determines the UEs served by the secondary CP and sends information of the determined UEs served by the secondary CP to the secondary CP.

Alternatively, in this example, the processor performs, according to program codes stored in the storage medium, a step described below. Before the cell splitting instruction sent by the master CP of the merged cell and used for requesting for splitting the secondary CP from the merged cell is received, the master CP determines whether the merged cell satisfies at least one of the following splitting trigger conditions: a higher-priority UE satisfying a predetermined UE level leaves the merged cell, a level of a co-channel interference of the merged cell is lower than a predetermined level, and the number of UEs served by the merged cell is lower than a predetermined threshold; and the master CP sends the cell splitting instruction used for requesting for splitting the secondary CP from the merged cell to the secondary CP if the merged cell satisfies at least one of the splitting trigger conditions.

Apparently, it should be understood by those skilled in the art that each of the above-mentioned modules or steps of the present application may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatuses, so that the modules or steps may be stored in a storage apparatus and executed by the computing apparatuses. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present application is not limited to any specific combination of hardware and software.

**INDUSTRIAL APPLICABILITY**

As described below, a cell merging method and apparatus, and a base station provided by the embodiments of the present application have the following beneficial effects: the problem in the existing art that the state and traffic of the UE cannot be guaranteed in a multi-cell merging and splitting process since the UE is released is solved, and the best state and traffic effect of as many UEs as possible are effectively guaranteed.

**Claims**

1. A cell merging method, comprising

receiving (S202), by a coordination cell, a cell merging instruction sent by an initiating cell and used for instructing merging of the initiating cell and the coordination cell;
maintaining (S204), by the coordination cell, a cell parameter of the coordination cell and a cell parameter of the initiating cell according to the cell merging instruction;
handing over (S206), by the coordination cell, user equipments, UEs, served by the coordination cell to a first shadow cell and synchronizing information of the handed over UEs with the initiating cell, wherein the first shadow cell has the cell parameter of the initiating cell and is maintained by the coordination cell; and
after all UEs served by the coordination cell are handed over to the first shadow cell and it is determined that information of all the handed over UEs is synchronized with the initiating cell, the coordination cell stopping (S208) maintaining the cell parameter of the coordination cell; wherein the cell parameter comprises a reference signal, RS, a primary synchronization signal, PSS, a secondary synchronization signal, SSS, a master information block, MIB, and a system information block, SIB, of the cell; and wherein the maintaining (S204), by the coordination cell, the cell parameter of the coordination cell and the cell parameter of the initiating cell according to the cell merging instruction comprises: transmitting the reference signal, RS, the primary synchronization signal, PSS, the secondary synchronization signal, SSS, the master information block, MIB, and the system information block, SIB, of both the initiating cell and the coordination cell.

2. The method of claim 1, wherein before receiving the cell merging instruction sent by the initiating cell and used for instructing merging of the initiating cell and the coordination cell, the method further comprises:

receiving, by the coordination cell, a cell merging request sent by the initiating cell and used for requesting merging of the initiating cell and the coordination cell; and
sending, by the coordination cell, a cell merging response to the initiating cell, wherein the cell merging response carries cell information of the coordination cell, wherein the cell information is used by the initiating cell to determine whether the coordination cell satisfies a merging condition for merging with the initiating cell.

3. The method of claim 2, wherein the cell information comprises at least one of:

a number of UEs served by the coordination cell;
indication information indicating whether the coordination cell has a higher-priority UE satisfying a predetermined UE level; and
information for identifying an interference level of a co-channel interference suffered by the coordination cell under and caused by other cells other than the coordination cell.

4. The method of claim 2, wherein after sending, by the coordination cell, the cell merging response to the initiating cell, the method further comprises:

determining, by the initiating cell, whether one or more coordination cells satisfy a predetermined merging condition for merging with the initiating cell according to the cell merging responses sent by the one or more coordination cells; and
sending, by the initiating cell, the cell merging instruction to the one or more coordination cells upon determining that the predetermined merging condition is satisfied.

5. The method of claim 2, wherein before receiving, by the coordination cell, the cell merging request sent by the initiating cell and used for requesting merging of the initiating cell and the coordination cell, the method further comprises:

determining, by the initiating cell, whether at least one of the following merging trigger conditions is satisfied: a higher-priority UE satisfying a predetermined UE level enters the initiating cell, a level of a co-channel interference suffered by the initiating cell reaches a predetermined level, and a number of UEs served by the initiating cell exceeds a predetermined threshold; and
sending, the initiating cell, the cell merging request used for requesting merging of the initiating cell and the coordination cell to the coordination cell upon determining at least one of the merging trigger conditions is satisfied.

6. A cell merging system, comprising a first cell merging apparatus applied to a coordination cell and a second cell merging apparatus applied to an initiating cell, wherein the first cell merging apparatus comprises:

a first receiving module (92), configured to receive a cell merging instruction sent by the initiating cell and used for instructing merging of the initiating cell and the coordination cell;

a first maintenance module (96), configured to, according to the cell merging instruction, maintain a cell parameter of the initiating cell while maintaining a cell parameter of the coordination cell;

a first handover module (94), configured to hand over user equipments, UEs, served by the coordination cell to a first shadow cell and synchronize information of the handed over UEs with the initiating cell, wherein the first shadow cell has the cell parameter of the initiating cell and is maintained by the coordination cell; and

a first stopping module (98), configured to stop maintaining the cell parameter of the coordination cell after all the UEs served by the coordination cell are handed over to the first shadow cell and it is determined that the information of all the handed over UEs is synchronized with the initiating cell;

wherein the cell parameter comprises a reference signal, RS, a primary synchronization signal, PSS, a secondary synchronization signal, SSS, a master information block, MIB, and a system information block, SIB, of the cell; and wherein the first maintenance module (96) is further configured to: transmit the reference signal, RS, the primary synchronization signal, PSS, the secondary synchronization signal, SSS, the master information block, MIB, and the system information block, SIB, of both the initiating cell and the coordination cell.

7. The system of claim 6, wherein the first cell merging apparatus further comprises:

a second receiving module (102), configured to receive a cell merging request sent by the initiating cell, wherein the cell merging request is used for requesting merging the initiating cell with the coordination cell; and

a first sending module (104), configured to send a cell merging response to the initiating cell, wherein the cell merging response carries cell information of the coordination cell, wherein the cell information is used by the initiating cell to determine whether the coordination cell satisfies a merging condition for merging with the initiating cell.

8. The system of claim 7, wherein the second cell merging apparatus comprises: a first determination module (112), configured to determine whether one or more coordination cells satisfy a predetermined merging condition for merging with the initiating cell according to the cell merging responses sent by the one or more coordination cells, and to send the cell merging instruction to the one or more coordination cells if the predetermined merging condition is satisfied.

9. The system of claim 7, wherein the second cell merging apparatus comprises: a second determination module (122), configured to determine whether at least one of the following merging trigger conditions is satisfied: a higher-priority UE satisfying a predetermined UE level enters the initiating cell, a level of a co-channel interference suffered by the initiating cell reaches a predetermined level, and a number of UEs served by the initiating cell exceeds a predetermined threshold; and to send the cell merging request used for requesting merging of the initiating cell and the coordination cell to the coordination cell if at least one of the merging trigger conditions is satisfied.

10. A base station (160), comprising: the system of any one of claims 6 to 9.

**Patentansprüche**

1. Zellenvereinigungsverfahren, umfassend:

Empfangen (S202), durch eine Koordinationszelle, einer Zellenvereinigungsanweisung, die von einer initiierenden Zelle gesendet wurde und zum Anweisen des Vereinigens der initiierenden Zelle und der Koordinationszelle verwendet wird;

Aufrechterhalten (S204), durch die Koordinationszelle, eines Zellenparameters der Koordinationszelle und eines Zellenparameters der initiierenden Zelle gemäß der Zellenvereinigungsanweisung;

Übergeben (S206) von Benutzergeräten, UEs, die von der Koordinationszelle bedient werden, durch die Koordinationszelle an eine erste Schattenzelle und Synchronisieren von Informationen der übergebenen UEs mit der initiierenden Zelle, wobei die erste Schattenzelle den Zellenparameter der initiierenden Zelle aufweist und von der Koordinationszelle aufrechterhalten wird; und

nachdem alle von der Koordinationszelle bedienten UEs an die erste Schattenzelle übergeben wurden und bestimmt wurde, dass die Informationen aller übergebenen UEs mit der initiierenden Zelle synchronisiert sind, Beendigen (S208) des Aufrechterhaltens des Zellenparameters der Koordinationszelle durch die Koordinationszelle;

wobei der Zellenparameter ein Referenzsignal, RS, ein primäres Synchronisationssignal, PSS, ein sekundäres Synchronisationssignal, SSS, einen Master-Informationsblock, MIB, und einen System-Informationsblock, SIB, der Zelle umfasst; und

wobei das Aufrechterhalten (S204) des Zellenparameters der Koordinationszelle und des Zellenparameters der initiierenden Zelle durch die Koordinationszelle gemäß der Zellenvereinigungsanweisung Folgendes umfasst: Übermitteln des Referenzsignals RS, des primären Synchronisationssignals PSS, des sekundären Synchronisationssignals SSS, des Master-Informationsblocks MIB und des System-Informationsblocks SIB sowohl der initiierenden Zelle als auch der Koordinationszelle.

2. Verfahren nach Anspruch 1, wobei das Verfahren ferner vor dem Empfangen der von der initiierenden Zelle gesendeten und zum Anweisen des Vereinigens der initiierenden Zelle und der Koordinationszelle verwendeten Zellenvereinigungsanweisung Folgendes umfasst:

Empfangen, durch die Koordinationszelle, einer Zellenvereinigungsanforderung, die von der initiierenden Zelle gesendet wurde und zum Anfordern des Vereinigens der initiierenden Zelle und der Koordinationszelle verwendet wird; und
Senden, durch die Koordinationszelle, einer Zellenvereinigungsantwort an die initiierende Zelle, wobei die Zellenvereinigungsantwort Zelleninformationen der Koordinationszelle trägt, wobei die Zelleninformationen durch die initiierende Zelle verwendet werden, um zu bestimmen, ob die Koordinationszelle eine Vereinigungsbedingung für die Vereinigung mit der initiierenden Zelle erfüllt.

3. Verfahren nach Anspruch 2, wobei die Zelleninformationen mindestens eines von Folgenden umfassen:

eine Anzahl von UEs, die von der Koordinationszelle bedient werden;
Anzeigeinformation, die anzeigen, ob die Koordinationszelle ein UE höherer Priorität aufweist, das einen vorbestimmten UE-Level erfüllt; und
Informationen zum Identifizieren eines Interferenzlevels einer Gleichkanalinterferenz, unter der die Koordinationszelle leidet und die durch andere Zellen als die Koordinationszelle verursacht wird.

4. Verfahren nach Anspruch 2, wobei das Verfahren nach dem Senden der Zellenvereinigungsantwort durch die Koordinationszelle an die initiierende Zelle ferner umfasst:

Bestimmen, durch die initiierende Zelle, ob eine oder mehrere Koordinationszellen eine vorbestimmte Vereinigungsbedingung zum Vereinigen mit der initiierenden Zelle gemäß den von der einen oder mehreren Koordinationszellen gesendeten Zellenvereinigungsantworten erfüllen; und
Senden, durch die initiierende Zelle, der Zellenvereinigungsanweisung an die eine oder mehrere Koordinationszellen nach dem Bestimmen, dass die vorbestimmte Vereinigungsbedingung erfüllt ist.

5. Verfahren nach Anspruch 2, wobei das Verfahren vor dem Empfangen der von der initiierenden Zelle gesendeten und zum Anfordern des Vereinigens der initiierenden Zelle und der Koordinationszelle verwendeten Zellenvereinigungsanforderung durch die Koordinationszelle ferner umfasst:

Bestimmen, durch die initiierende Zelle, ob mindestens eine der folgenden Vereinigungsauslösebedingungen erfüllt ist: ein UE höherer Priorität, das einen vorbestimmten UE-Level erfüllt, tritt in die initiierende Zelle ein, ein Level einer von der initiierenden Zelle erlittenen Gleichkanalinterferenz erreicht einen vorbestimmten Level, und eine Anzahl von UEs, die von der initiierenden Zelle bedient werden, überschreitet einen vorbestimmten Schwellenwert; und
Senden der Zellenvereinigungsanforderung, die zum Anfordern des Vereinigens der initiierenden Zelle und der Koordinationszelle verwendet wird, an die Koordinationszelle, wenn bestimmt wird, dass mindestens eine der Vereinigungsauslösebedingungen erfüllt ist.

6. Zellenvereinigungssystem, umfassend eine erste Zellenvereinigungsvorrichtung, die auf eine Koordinationszelle angewandt wird, und eine zweite Zellenvereinigungsvorrichtung, die auf eine initiierende Zelle angewandt wird, wobei die erste Zellenvereinigungsvorrichtung Folgendes umfasst:

ein erstes Empfangsmodul (92), das dazu konfiguriert ist, eine von der initiierenden Zelle gesendete Zellenvereinigungsanweisung zu empfangen, die dazu verwendet wird, das Vereinigen der initiierenden Zelle und der Koordinationszelle anzuweisen;
ein erstes Wartungsmodul (96), das dazu konfiguriert ist, gemäß der Zellenvereinigungsanweisung einen Zellenparameter der initiierenden Zelle aufrecht zu erhalten, während es einen Zellenparameter der Koordinationszelle aufrechterhält;
ein erstes Übergabemodul (94), das dazu konfiguriert ist, Benutzergeräte, UEs, die von der Koordinationszelle bedient werden, durch die Koordinationszelle an eine erste Schattenzelle zu übergeben und Informationen der übergebenen UEs mit der initiierenden Zelle zu synchronisieren, wobei die erste Schattenzelle den Zellenparameter der initiierenden Zelle aufweist und von der Koordinationszelle aufrechterhalten wird; und

ein erstes Beendigungsmodul (98), das dazu konfiguriert ist, das Aufrechterhalten des Zellenparameters der Koordinationszelle zu beenden, nachdem alle von der Koordinationszelle bedienten UEs an die erste Schattenzelle übergeben wurden und bestimmt wurde, dass die Informationen aller übergebenen UEs mit der initiierenden Zelle synchronisiert sind;

wobei der Zellenparameter ein Referenzsignal, RS, ein primäres Synchronisationssignal, PSS, ein sekundäres Synchronisationssignal, SSS, einen Master-Informationsblock, MIB, und einen System-Informationsblock, SIB, der Zelle umfasst; und

wobei das erste Wartungsmodul (96) ferner für Folgendes konfiguriert ist: Übermitteln des Referenzsignals RS, des primären Synchronisationssignals PSS, des sekundären Synchronisationssignals SSS, des Master-Informationsblocks MIB und des System-Informationsblocks SIB sowohl der initiierenden Zelle als auch der Koordinationszelle.

7. System nach Anspruch 6, wobei die erste Zellenvereinigungsvorrichtung ferner Folgendes umfasst:

ein zweites Empfangsmodul (102), das dazu konfiguriert ist, eine von der initiierenden Zelle gesendete Zellenvereinigungsanforderung zu empfangen, wobei die Zellenvereinigungsanforderung dazu verwendet wird, das Vereinigen der initiierenden Zelle mit der Koordinationszelle anzufordern; und

Ein erstes Sendemodul (104), das dazu konfiguriert ist, eine Zellenvereinigungsantwort an die initiierende Zelle zu senden, wobei die Zellenvereinigungsantwort Zelleninformationen der Koordinationszelle trägt, wobei die Zelleninformationen durch die initiierende Zelle verwendet werden, um zu bestimmen, ob die Koordinationszelle eine Vereinigungsbedingung für die Vereinigung mit der initiierenden Zelle erfüllt.

8. System nach Anspruch 7, wobei die zweite Zellenvereinigungsvorrichtung Folgendes umfasst: ein erstes Bestimmungsmodul (112), das dazu konfiguriert ist, gemäß den von der einen oder den mehreren Koordinationszellen gesendeten Zellenvereinigungsantworten zu bestimmen, ob eine oder mehrere Koordinationszellen eine vorbestimmte Vereinigungsbedingung zum Vereinigen mit der initiierenden Zelle erfüllen, und die Zellenvereinigungsanweisung an die eine oder die mehreren Koordinationszellen zu senden, wenn die vorbestimmte Vereinigungsbedingung erfüllt ist.

9. System nach Anspruch 7, wobei die zweite Zellenvereinigungsvorrichtung Folgendes umfasst: ein zweites Bestimmungsmodul (122), das dazu konfiguriert ist, zu bestimmen, ob mindestens eine der folgenden Vereinigungsauslösebedingungen erfüllt ist: ein UE höherer Priorität, das einen vorbestimmten UE-Level erfüllt, tritt in die initiierende Zelle ein, ein Level einer Gleichkanalinterferenz, unter der die initiierende Zelle leidet, erreicht einen vorbestimmten Level, und eine Anzahl von UEs, die von der initiierenden Zelle bedient werden, übersteigt einen vorbestimmten Schwellenwert; und um die Zellenvereinigungsanforderung, die verwendet wird, um das Vereinigen der initiierenden Zelle und der Koordinationszelle anzufordern, an die Koordinationszelle zu senden, wenn mindestens eine der Vereinigungsauslösebedingungen erfüllt ist.

10. Basisstation (160), umfassend: das System nach einem der Ansprüche 6 bis 9.


**Revendications**

1. Procédé de fusion de cellules, comprenant :

la réception (S202), par une cellule de coordination, d'une instruction de fusion de cellules envoyée par une cellule initiatrice et utilisée pour ordonner la fusion de la cellule initiatrice et de la cellule de coordination ;

la préservation (S204), par la cellule de coordination, d'un paramètre de cellule de la cellule de coordination et un paramètre de cellule de la cellule initiatrice conformément à l'instruction de fusion de cellules ;

le transfert (S206), par la cellule de coordination, d'équipements utilisateurs, UE, desservis par la cellule de coordination à une première cellule fantôme et la synchronisation d'informations des UE transférés avec la cellule initiatrice, dans lequel la première cellule fantôme a le paramètre de cellule de la cellule initiatrice et est préservé par la cellule de coordination ; et

après que tous les UE desservis par la cellule de coordination ont été transférés à la première cellule fantôme et qu'il est déterminé que les informations de tous les UE transférés sont synchronisées avec la cellule initiatrice, l'interruption (S208) par la cellule de coordination de la préservation du paramètre de cellule de la cellule de coordination ;

dans lequel le paramètre de cellule comprend un signal de référence, RS, un signal de synchronisation primaire, PSS, un signal de synchronisation secondaire, SSS, un bloc d'informations maître, MIB, et un bloc d'informations système, SIB, de la cellule ; et

dans lequel la préservation (S204), par la cellule de coordination, du paramètre de cellule de la cellule de coordination et du paramètre de cellule de la cellule initiatrice conformément à l'instruction de fusion de cellules comprend : la transmission du signal de référence, RS, du signal de synchronisation primaire, PSS, du signal de synchronisation secondaire, SSS, du bloc d'informations maître, MIB, et du bloc d'informations système, SIB, à la fois de la cellule initiatrice et de la cellule de coordination.

2. Procédé selon la revendication 1, dans lequel avant la réception de l'instruction de fusion de cellules envoyée par la cellule initiatrice et utilisée pour ordonner la fusion de la cellule initiatrice et de la cellule de coordination, le procédé comprend en outre :

la réception, par la cellule de coordination, d'une demande de fusion de cellules envoyée par la cellule initiatrice et utilisée pour demander la fusion de la cellule initiatrice et de la cellule de coordination ; et

l'envoi, par la cellule de coordination, d'une réponse de fusion de cellules à la cellule initiatrice, dans lequel la réponse de fusion de cellules transporte des informations de cellule de la cellule de coordination, dans lequel les informations de cellule sont utilisées par la cellule initiatrice pour déterminer si la cellule de coordination satisfait à une condition de fusion pour une fusion avec la cellule initiatrice.

3. Procédé selon la revendication 2, dans lequel les informations de cellule comprennent au moins l'un parmi :

un certain nombre d'UE desservis par la cellule de coordination ;

des informations d'indication indiquant si la cellule de coordination a un UE de priorité supérieure satisfaisant un niveau d'UE prédéterminé ; et

des informations pour identifier un niveau d'interférence d'une interférence de co-canal subie par la cellule de coordination sous et causée par d'autres cellules autres que la cellule de coordination.

4. Procédé selon la revendication 2, dans lequel après l'envoi, par la cellule de coordination, de la réponse de fusion de cellules à la cellule initiatrice, le procédé comprend en outre :

la détermination, par la cellule initiatrice, qu'une ou plusieurs cellules de coordination satisfont une condition de fusion prédéterminée pour fusionner avec la cellule initiatrice conformément aux réponses de fusion de cellules envoyées par les une ou plusieurs cellules de coordination ; et

l'envoi, par la cellule initiatrice, de l'instruction de fusion de cellules aux une ou plusieurs cellules de coordination lors de la détermination que la condition de fusion prédéterminée est satisfaite.

5. Procédé selon la revendication 2, dans lequel avant la réception, par la cellule de coordination, de la demande de fusion de cellules envoyée par la cellule initiatrice et utilisée pour demander la fusion de la cellule initiatrice et de la cellule de coordination, le procédé comprend en outre :

la détermination, par la cellule initiatrice, qu'au moins une des conditions de déclenchement de fusion suivantes est satisfaite : un UE de priorité supérieure satisfaisant à un niveau UE prédéterminé entre dans la cellule initiatrice, un niveau d'interférence de co-canal subi par la cellule initiatrice atteint un niveau prédéterminé, et un certain nombre d'UE desservis par la cellule initiatrice dépasse un seuil prédéterminé ; et

l'envoi, à la cellule initiatrice, de la demande de fusion de cellules utilisée pour demander la fusion de la cellule initiatrice et de la cellule de coordination à la cellule de coordination lors de la détermination qu'au moins une des conditions de déclenchement de fusion est satisfaite.

6. Système de fusion de cellules, comprenant un premier appareil de fusion de cellules appliqué à une cellule de coordination et un second appareil de fusion de cellules appliqué à une cellule initiatrice, dans lequel le premier appareil de fusion de cellules comprend :

un premier module de réception (92), configuré pour recevoir une instruction de fusion de cellules envoyée par la cellule initiatrice et utilisée pour ordonner la fusion de la cellule initiatrice et de la cellule de coordination ;

un premier module de préservation (96), configuré pour, conformément à l'instruction de fusion de cellules, préserver un paramètre de cellule de la cellule initiatrice tout en préservant un paramètre de cellule de la cellule de coordination ;

un premier module de transfert (94), configuré pour transférer des équipements utilisateurs, UE, desservis par la cellule de coordination à une première cellule fantôme et synchroniser des informations des UE transférés avec la cellule initiatrice, dans lequel la première cellule fantôme a le paramètre de cellule de la cellule initiatrice et est préservé par la cellule de coordination ; et
un premier module d'interruption (98), configuré pour interrompre la préservation du paramètre de cellule de la cellule de coordination après que tous les UE desservis par la cellule de coordination ont été transférés à la première cellule fantôme et qu'il est déterminé que les informations de tous les UE transférés sont synchronisées avec la cellule initiatrice ;
dans lequel le paramètre de cellule comprend un signal de référence, RS, un signal de synchronisation primaire, PSS, un signal de synchronisation secondaire, SSS, un bloc d'informations maître, MIB, et un bloc d'informations système, SIB, de la cellule ; et
dans lequel le premier module de préservation (96) est en outre configuré pour : transmettre le signal de référence, RS, le signal de synchronisation primaire, PSS, le signal de synchronisation secondaire, SSS, le bloc d'informations maître, MIB, et le bloc d'informations système, SIB, à la fois de la cellule initiatrice et de la cellule de coordination.

7. Système selon la revendication 6, dans lequel le premier appareil de fusion de cellules comprend en outre :

un second module de réception (102), configuré pour recevoir une demande de fusion de cellules envoyée par la cellule initiatrice, dans lequel la demande de fusion de cellules est utilisée pour demander la fusion de la cellule initiatrice avec la cellule de coordination ; et
un premier module d'envoi (104), configuré pour envoyer une réponse de fusion de cellules à la cellule initiatrice, dans lequel la réponse de fusion de cellules transporte des informations de cellule de la cellule de coordination, dans lequel les informations de cellule sont utilisées par la cellule initiatrice pour déterminer si la cellule de coordination satisfait à une condition de fusion pour une fusion avec la cellule initiatrice.

8. Système selon la revendication 7, dans lequel le second appareil de fusion de cellules comprend : un premier module de détermination (112), configuré pour déterminer si une ou plusieurs cellules de coordination satisfont une condition de fusion prédéterminée pour fusionner avec la cellule initiatrice conformément aux réponses de fusion de cellules envoyées par les une ou plusieurs cellules de coordination, et pour envoyer l'instruction de fusion de cellules aux une ou plusieurs cellules de coordination si la condition de fusion prédéterminée est satisfaite.

9. Système selon la revendication 7, dans lequel le second appareil de fusion de cellules comprend : un second module de détermination (122), configuré pour déterminer si au moins une des conditions de déclenchement de fusion suivantes est satisfaite : un UE de priorité supérieure satisfaisant un niveau d'UE prédéterminé entre dans la cellule initiatrice, un niveau d'interférence de co-canal subi par la cellule initiatrice atteint un niveau prédéterminé, et un certain nombre d'UE desservis par la cellule initiatrice dépasse un seuil prédéterminé ; et pour envoyer la demande de fusion de cellules utilisée pour demander la fusion de la cellule initiatrice et de la cellule de coordination à la cellule de coordination si au moins une des conditions de déclenchement de fusion est satisfaite.

10. Station de base (160), comprenant : le système selon l'une quelconque des revendications 6 à 9.

Mobile terminal 10

```
┌─────────────────────────────────────────────────────┐
│                                                       │
│  ┌─────────────────────┐      ┌──────────────────┐   │
│  │                     │      │   Transmission   │   │
│  │   Processor 102     │◄────►│  apparatus 106   │   │
│  │                     │      │                  │   │
│  └─────────────────────┘      └──────────────────┘   │
│            ▲                                           │
│            │                                           │
│            ▼                                           │
│  ┌─────────────────────┐                              │
│  │                     │                              │
│  │    Memory 104       │                              │
│  │                     │                              │
│  └─────────────────────┘                              │
│                                                       │
└─────────────────────────────────────────────────────┘
```

FIG. 1

```
┌───────────────────────────────────────────────────────┐
│ Receive a cell merging instruction sent by a first cell│      S202
│ and used for instructing merging the first cell with a │  ⌒
│                      second cell                        │
└───────────────────────────────────────────────────────┘
                            │
                            ▼
┌───────────────────────────────────────────────────────┐
│ Maintain a cell parameter of the second cell and a cell│      S204
│ parameter of the first cell according to the cell      │  ⌒
│                  merging instruction                    │
└───────────────────────────────────────────────────────┘
                            │
                            ▼
┌───────────────────────────────────────────────────────┐
│   Hand over UEs served by the second cell to a first   │
│ shadow cell and synchronize information of the handed   │      S206
│ over UEs with the first cell, where the first shadow   │  ⌒
│ cell has the cell parameter of the first cell and is   │
│             maintained by the second cell               │
└───────────────────────────────────────────────────────┘
                            │
                            ▼
┌───────────────────────────────────────────────────────┐
│ After all the UEs served by the second cell are handed │
│ over to the first shadow cell and it is determined that │      S208
│ the information of all the handed over UEs is           │  ⌒
│ synchronized with the first cell, stop maintaining the │
│             cell parameter of the second cell           │
└───────────────────────────────────────────────────────┘
```

FIG. 2

Receive a cell splitting instruction sent by a master cell portion (CP) of a merged cell and used for requesting splitting a secondary CP from the merged cell

S302

Maintain a cell parameter of the merged cell and a cell parameter of a splitting cell split from the merged cell according to the cell splitting instruction

S304

Hand over UEs served by the secondary CP to a second shadow cell, where the second shadow cell has the cell parameter of the splitting cell and is maintained by the secondary CP

S306

After all the UEs served by the secondary CP are handed over to the second shadow cell, stop maintaining the cell parameter of the merged cell

S308

FIG. 3

• Higher-priority UE

FIG. 4

A cell merging trigger module informs a cell that the cell is an initiating cell     S502

A coordination cell hands over UEs residing in the coordination cell to the initiating cell     S504

The coordination cell and the initiating cell are merged     S506

FIG. 5

A cell splitting module informs a merged cell that cell splitting is to be performed on the merged cell     S602

The merged cell hands over a target UE to an original coordination cell     S604

The merged cell is split into original cells     S606

FIG. 6

FIG. 7

Higher-priority UE | Mater CP (CP A) of a merged cell | Secondary CP (CP B) of the merged cell | UE which takes the secondary CP as a master CP at a UE level and is activated by a single CP

RRC connection release or handover and leaving

Stop accepting a new UE and select a target UE according to an activation set

Cell splitting request (target UE)

The CP B simultaneously maintains two sets of cell parameters and stops accepting a new UE

Coordination cell (CELL B)

Handover request

Handover request acknowledgement

RRC connection reconfiguration (carrying mobile control information required by handover)

Random access request MSG1

Random access response MSG2

RRC connection reconfiguration complete

A non-contention handover is taken as an example in a handover process in the method flowchart of a multi-cell organization shown in this embodiment, but it is not limited to the non-contention handover manner

......

Send RRC connection reconfiguration to the last UE

Cell splitting ending indication

The CELL B functions normally and the CP B stops services

FIG. 8

First receiving module 92

First maintenance module 94

First handover module 96

First stopping module 98

FIG. 9

Second receiving module 102

First sending module 104

First receiving module 92

First maintenance module 94

First handover module 96

First stopping module 98

FIG. 10

Second receiving module 102

First sending module 104

First determination module 112

First receiving module 92

First maintenance module 94

First handover module 96

First stopping module 98

FIG. 11

```
┌─────────────────────────────────────┐
│    Second receiving module 102       │
└─────────────────────────────────────┘
                  │
┌─────────────────────────────────────┐
│     First sending module 104         │
└─────────────────────────────────────┘
                  │
┌─────────────────────────────────────┐
│   Second determination module 122    │
└─────────────────────────────────────┘
                  │
┌─────────────────────────────────────┐
│     First receiving module 92        │
└─────────────────────────────────────┘
                  │
┌─────────────────────────────────────┐
│    First maintenance module 94       │
└─────────────────────────────────────┘
                  │
┌─────────────────────────────────────┐
│     First handover module 96         │
└─────────────────────────────────────┘
                  │
┌─────────────────────────────────────┐
│     First stopping module 98         │
└─────────────────────────────────────┘
```

FIG. 12

Third receiving module 132

Second maintenance module 134

Second handover module 136

Second stopping module 138

FIG. 13

Second sending module 142

Third receiving module 132

Second maintenance module 134

Second handover module 136

Second stopping module 138

FIG. 14

EP 3 550 869 B1

Third determination module 152

Third receiving module 132

Second maintenance module 134

Second handover module 136

Second stopping module 138

FIG. 15

Base station 160

Cell merging apparatus 162

Cell splitting apparatus 164

FIG. 16

32

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3rd Generation Partnership Project; Technical Specification Group Radio Access Network; Evolved Universal Terrestrial Radio Access (E-UTRA); Study on Energy Saving Enhancement for E-UTRAN (Release 12). *3GPP STANDARD, 3GPP TR 36.887, V1.3.0,* 10 July 2014
- **SAMSUNG et al.** Leftover issue discussion on SON for AAS. *3GPP DRAFT; R3-151535,* 23 August 2015
- 3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 14). *3GPP STANDARD, 3GPP TR 36.300, V14.0.0,* 29 September 2016
- 3rd Generation Partnership Project; Technical Specification Group Services and System Aspects; Telecommunication management; Study on Operations, Administration and Maintenance (OAM) aspects of Self-Organizing Network (SON) for Active Antenna System (AAS) based deployments; (Release 14). *3GPP TR 32.865, V1.0.0,* 30 November 2016